# EUROPEAN PATENT APPLICATION

(11) **EP 4 246 754 A1**
(43) Date of publication of application: **20.09.2023**
(21) Application number: 23150560.3
(22) Date of filing: 06.01.2023
(51) Int. Cl.: H02J 3/32, H02J 7/00

(54) **SERVER AND CHARGING CONTROL METHOD**

(30) Priority: 16.03.2022 JP 2022041497
(71) Applicant: Toyota Jidosha Kabushiki Kaisha, Aichi-Ken Aichi 471-8571 (JP)
(72) Inventor: TAKAHASHI, Tomoya, Toyota-shi 471-8571 (JP)
(74) Representative: D Young & Co LLP

(57) **Abstract**

A server (200) controls a vehicle group (1) including a plurality of vehicles (100) configured to be electrically connectable to an external power source (PG). The server (200) includes a selection unit (210) that selects a plurality of target vehicles from among the vehicle group (1) before a start of a predetermined adjustment period, and a charging control unit (220). The charging control unit (220) controls at least one of the target vehicles such that a total charging power (W2) of the power accumulation device (11) included in each of the target vehicles electrically connected to the external power source (PG) follows a target value (W1) within the adjustment period, and advances a start of charging of a power accumulation device (11) included in a first vehicle of which a charging end time is reserved within the adjustment period from among the target vehicles.

## Description

### BACKGROUND OF THE INVENTION

### 1. Field of the Invention

The present disclosure relates to a server and a charging control method.

### 2. Description of Related Art

In recent years, an electricity company (hereinafter, referred to as an "aggregator") has been known that provides an energy management service by bundling a plurality of distributed energy resources (hereinafter, also referred to as "DERs"). For example, Japanese Unexamined Patent Application Publication No. 2020-156149 (JP 2020-156149 A) discloses a technique in which an aggregator operates a power device according to an operation plan. Since charging/discharging performance of the power device can change depending on an environment (for example, temperature), in JP 2020-156149 A, the aggregator acquires the charging/discharging performance of the power device corrected by environmental information.

### SUMMARY OF THE INVENTION

However, an xEV (for example, a battery electric vehicle) capable of accumulating power supplied from the outside of the vehicle can operate as an adjustment force of an external power source (for example, an adjustment force that causes power source and demand to be level). For this reason, for example, a server belonging to the aggregator can execute power adjustment of the external power source using a power accumulation device mounted the xEV by remotely controlling the xEV However, depending on a situation of the xEV, the server may not be able to execute the power adjustment of the external power source by the xEV For example, an xEV that is not electrically connected to an external power source does not function as an adjustment force of the external power source. Further, in the xEV for which timer charging has been reserved, the power accumulation device is charged according to a reserved charging schedule. The xEV during the timer charging does not execute the power adjustment of the external power source during the timer charging. On the other hand, when the server completely cancels the timer charging reserved for the xEV and uses the power accumulation device included in the xEV for the power adjustment of the external power source, it significantly impairs convenience for a user of the vehicle.

The present disclosure provides a server and a charging control method capable of suitably using a power accumulation device included in a vehicle for power adjustment of an external power source without excessively impairing convenience for a user of the vehicle.

A server according to a first aspect of the present disclosure is a server configured to control a vehicle group including a plurality of vehicles configured to be electrically connectable to an external power source. Each vehicle included in the vehicle group includes a power accumulation device. The server includes a selection unit configured to select a plurality of target vehicles from among the vehicle group before a start of a predetermined adjustment period, and a charging control unit. The charging control unit is configured to control at least one of the target vehicles such that a total charging power of the power accumulation device included in each of the target vehicles electrically connected to an external power source follows a target value within the adjustment period. Further, the charging control unit is configured to advance a start of charging of a power accumulation device included in a first vehicle of which a charging end time is reserved within the adjustment period from among the target vehicles.

The server can execute the power adjustment (hereinafter, also simply referred to as "power adjustment") of the external power source by selecting the target vehicles before the start of the adjustment period and controlling at least one of the target vehicles within the adjustment period. The selection unit may select some vehicles included in the vehicle group, or may select all vehicles included in the vehicle group. Further, the server is configured to advance a charging start time of the power accumulation device included in the first vehicle (that is, the vehicle of which the charging end time is reserved within the adjustment period) from among the selected target vehicles. With such a configuration, it is possible to achieve actions and advantageous effects described below.

The vehicle reserved for the charging executes timer charging. The timer charging is charging according to a charging schedule reserved for the vehicle. The first vehicle executes the timer charging within the adjustment period. Since the timer charging executed by the target vehicle within the adjustment period is not charging for the power adjustment, it becomes a disturbance for the power adjustment. An influence of such a disturbance can be offset by charging restriction and/or discharging of the power accumulation devices in other target vehicles. However, when the total charging power of the timer charging within the adjustment period exceeds a level (a permissible level) adjustable by the other target vehicles, accuracy of the power adjustment (trackability with respect to the target value) easily decreases. Then, the server completes the timer charging of the first vehicle earlier than a reserved charging end time by advancing the start of the timer charging in the first vehicle. As such, a period during which the first vehicle executes the timer charging within the adjustment period is shortened, and a decrease in the accuracy of power adjustment is restricted.

The charging end time reserved for the vehicle by a user often corresponds to a scheduled departure time of the vehicle. When the completion of the charging is delayed for the power adjustment, there is a high possibility that the charging may not be completed when the vehicle departs, thereby significantly impairing the convenience for the user of the vehicle. On the other hand, when the completion of the charging is advanced for the power adjustment, the charging is completed when the vehicle departs, thus it is not considered to significantly impair the convenience for the user of the vehicle.

As described above, with the server having such a configuration, it is possible to suitably use the power accumulation device included in the vehicle for the power adjustment of the external power source without excessively impairing the convenience for the user of the vehicle.

The external power source may be a power grid (for example, a microgrid or a large-scale power grid maintained as infrastructure) that supplies power to a predetermined area. The external power source may be a smart grid. The external power source may supply alternating current or may supply direct current. The power adjustment may be frequency control or supply and demand balance adjustment.

In the first aspect, the charging control unit may be configured to advance the start of the charging of the power accumulation device included in the first vehicle such that the charging is completed before the start of the adjustment period.

With such a configuration, it is possible to complete the timer charging of the first vehicle before the start of the adjustment period. As such, the disturbance for the power adjustment decreases.

In the first aspect, the selection unit may be configured to select the target vehicles from among the vehicle group a day before or two days before the adjustment period. The charging control unit may be configured to, before the start of the adjustment period, distinguish the first vehicle from among the target vehicles and advance the start of the charging of the power accumulation device included in the first vehicle, and then sequentially receive the target value arbitrarily requested within a power range set in advance within the adjustment period.

The earlier the target vehicle is decided with respect to the adjustment period, the more highly possible it is that the user may change the content of a charging reservation until the start of the adjustment period. For this reason, even when the target vehicle is selected while avoiding the first vehicle, the charging schedule reserved for the target vehicle is changed, and thus the selected target vehicle may become the first vehicle. In this regard, by advancing the start of the timer charging in the first vehicle before the start of the adjustment period, the server can decrease the disturbance for the power adjustment. Further, by controlling the target vehicle according to the target value that is sequentially received within the adjustment period, the server can execute the power adjustment of the external power source.

In the first aspect, each vehicle included in the vehicle group may be configured to reserve the charging end time and a target state of charge (SOC). The charging control unit may be configured to acquire, for the target vehicle of which the charging end time and the target SOC are reserved, a charging start time at which a SOC of the power accumulation device included in the target vehicle reaches the target SOC at the charging end time.

With such a configuration, the charging control unit easily distinguishes a predetermined vehicle (for example, at least one of first to seventh vehicles described below) from among the target vehicles using the charging start time. The charging control unit may obtain the charging start time based on the charging end time and the target SOC acquired from the vehicle. Alternatively, the charging control unit may acquire, from the vehicle, the charging start time obtained by the vehicle. A SOC indicates a remaining amount of power accumulated in the power accumulation device, and shows, for example, a ratio of a current amount of accumulated power to an amount of accumulated power in a fully charged state expressed as 0 to 100%.

In the first aspect, the charging control unit may be configured to distinguish a second vehicle of which the charging start time is after an end of the adjustment period and which is electrically connected to the external power source before the start of the adjustment period from among the target vehicles. The charging control unit may be configured to execute charging control of a power accumulation device included in the second vehicle such that the total charging power follows the target value within the adjustment period.

The charging control unit executes the power adjustment using the power accumulation device included in the second vehicle within the adjustment period. The second vehicle can charge the power accumulation device to the target SOC even when starting the timer charging after the adjustment period. For this reason, even when the power adjustment is executed as above, it is considered that the convenience for the user of the second vehicle is not significantly impaired.

In the first aspect, the charging control unit may be configured to distinguish a third vehicle of which the charging end time is after an end of the adjustment period and which is electrically connected to the external power source before the start of the adjustment period and after the charging start time from among the target vehicles. The charging control unit may be configured to continue charging of a power accumulation device included in the third vehicle from a time when the third vehicle is electrically connected to the external power source to the charging end time.

In the third vehicle, even when the charging of the power accumulation device is continued throughout the adjustment period, it is considered that the SOC of the power accumulation device may not reach the target SOC until the reserved charging end time. However, with such a configuration, since the charging of the power accumulation device of the third vehicle is started as soon as the third vehicle is electrically connected to the external power source, the SOC of the power accumulation device is easily brought closer to the target SOC at the charging end time.

In the first aspect, the charging control unit may be configured to distinguish a fourth vehicle of which the charging start time is within the adjustment period and which is electrically connected to the external power source before the start of the adjustment period from among the target vehicles. The charging control unit may be configured to continue charging of a power accumulation device included in the fourth vehicle from a time when the fourth vehicle is electrically connected to the external power source to a start time of the adjustment period.

The server starts the charging of the power accumulation device of the fourth vehicle as soon as the fourth vehicle is electrically connected to the external power source. As such, the fourth vehicle easily brings the SOC of the power accumulation device closer to the target SOC at the reserved charging end time. Further, the server can execute the power adjustment within the adjustment period using the power accumulation device included in the fourth vehicle. With such a configuration, it is easy to execute the power adjustment within the adjustment period using the power accumulation device included in the fourth vehicle and bring the SOC of the power accumulation device closer to the target SOC at the charging end time of the fourth vehicle.

In the first aspect, the charging control unit may be configured to distinguish a fifth vehicle of which the charging start time is after an end of the adjustment period and which is electrically connected to the external power source during the adjustment period from among the target vehicles. The charging control unit may be configured to execute charging control of a power accumulation device included in the fifth vehicle such that the total charging power follows the target value within the adjustment period.

The charging control unit executes the power adjustment using the power accumulation device included in the fifth vehicle within the adjustment period. The fifth vehicle can charge the power accumulation device to the target SOC even when starting the timer charging after the adjustment period. For this reason, even when the power adjustment is executed as above, it is considered that the convenience for the user of the fifth vehicle is not significantly impaired.

In the first aspect, the charging control unit may be configured to distinguish a sixth vehicle which is electrically connected to the external power source within the adjustment period and after the charging start time from among the target vehicles. The charging control unit may be configured to immediately start charging of a power accumulation device included in the sixth vehicle when the sixth vehicle is electrically connected to the external power source.

With such a configuration, the charging of the power accumulation device of the sixth vehicle is started as soon as the sixth vehicle is electrically connected to the external power source such that the SOC of the power accumulation device is easily brought closer to the target SOC at the charging end time of the sixth vehicle.

In the first aspect, the charging control unit may be configured to distinguish a seventh vehicle which is electrically connected to the external power source before the charging start time within the adjustment period and after the start of the adjustment period from among the target vehicles. The charging control unit may be configured to execute charging control of a power accumulation device included in the seventh vehicle such that the total charging power follows the target value in a period from a time when the seventh vehicle is electrically connected to the external power source to a time when the charging start time arrives.

In the period from when the seventh vehicle is electrically connected to the external power source to the time when the charging start time of the seventh vehicle arrives, the server executes the power adjustment using the power accumulation device included in the seventh vehicle. The seventh vehicle can charge the power accumulation device to the target SOC when starting the timer charging at the charging start time. For this reason, even when the power accumulation device of the seventh vehicle is used for the power adjustment as above, it is considered that the convenience for the user of the seventh vehicle is not significantly impaired.

In the first aspect, the selection unit may be configured to preferentially select a vehicle reserved for timer charging as the target vehicle.

In a vehicle for which the timer charging (for example, the charging end time and the target SOC for the timer charging) is not reserved, the power accumulation device tends to be charged by immediate charging or a manual operation by the user. The immediate charging is started as soon as the vehicle is electrically connected to the external power source. A user of such a vehicle often does not want a server to remotely control the vehicle. With such a configuration, by preferentially selecting the vehicle reserved for the timer charging as the target vehicle, it is possible to restrict the convenience for the user of the vehicle from decreasing.

In the first aspect, the server may further include a prediction unit configured to execute movement prediction of each vehicle included in the vehicle group. The selection unit may be configured to preferentially select, as the target vehicle, a vehicle predicted to maintain a state of being electrically connected to the external power source throughout the adjustment period, using a result of the movement prediction by the prediction unit.

The vehicle (for example, a vehicle during traveling) that is not electrically connected to the external power source does not function as the adjustment force of the external power source. Then, the server predicts a movement schedule of each vehicle included in the vehicle group before selecting the target vehicle from the vehicle group. Then, the server preferentially selects, as the target vehicle, the vehicle predicted to maintain the state of being electrically connected to the external power source throughout the adjustment period. As such, the vehicle (the power accumulation device) usable for the power adjustment is easily secured.

A charging control method according to a second aspect of the present disclosure includes selecting a plurality of target vehicles from among a vehicle group before a start of a predetermined adjustment period, advancing a start of charging of a power accumulation device included in a target vehicle reserved for a charging end time within the adjustment period from among the selected target vehicles, and controlling at least one of the target vehicles such that a total charging power of the power accumulation device included in each of the target vehicles electrically connected to the external power source follows a target value within the adjustment period.

In the same manner as the server described above, with the charging control method, it is also possible to suitably use the power accumulation device included in the vehicle for power adjustment of the external power source without excessively impairing the convenience for a user of the vehicle.

With the present disclosure, it is possible to suitably use a power accumulation device included in a vehicle for power adjustment of an external power source without excessively impairing convenience for a user of a vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of a management system according to an embodiment of the present disclosure;
FIG. 2 is a diagram illustrating configurations of a vehicle and electric vehicle supply equipment illustrated in FIG. 1;
FIG. 3 is a diagram illustrating an overview of a tertiary adjustment force-2;
FIG. 4 is a flowchart illustrating processing on market transaction executed by a server illustrated in FIG. 1;
FIG. 5 is a diagram for describing first to fourth vehicles;
FIG. 6 is a flowchart illustrating processing for distinguishing the first vehicle executed by the server illustrated in FIG. 1;
FIG. 7 is a diagram for describing processing for advancing a start of charging of a power accumulation device included in the first vehicle by the server in a charging control method according to the embodiment of the present disclosure;
FIG. 8 is a diagram for describing processing for changing a schedule of timer charging reserved for the fourth vehicle by the server in the charging control method according to the embodiment of the present disclosure;
FIG. 9 is a diagram for describing fifth to seventh vehicles;
FIG. 10 is a flowchart illustrating processing for distinguishing the second vehicle executed by the server illustrated in FIG. 1;
FIG. 11 is a flowchart illustrating processing on power adjustment of an external power source executed by the server illustrated FIG. 1; and
FIG. 12 is a flowchart illustrating processing on the timer charging executed by a target vehicle for which the timer charging is reserved.

### DETAILED DESCRIPTION OF EMBODIMENTS

Embodiments of the present disclosure will be described in detail with reference to the drawings. In the drawings, the same or corresponding parts are denoted by the same reference signs, and the description thereof will not be repeated.

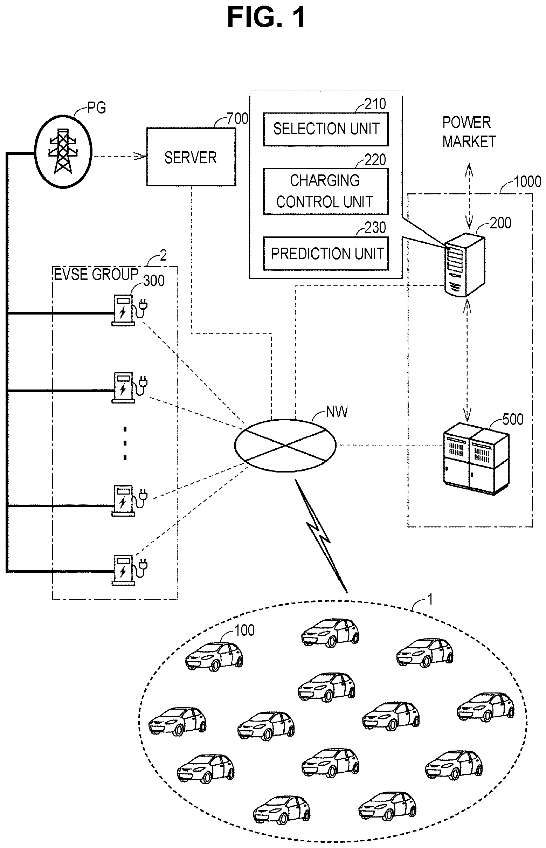

FIG. 1 is a diagram illustrating a schematic configuration of a management system according to an embodiment of the present disclosure. With reference to FIG. 1, the management system according to this embodiment includes a vehicle group 1, an EVSE group 2, a server 700, and a management device 1000. The management device 1000 includes servers 200 and 500. EVSE means electric vehicle supply equipment.

Each of the servers 200, 500, 700 is a computer having, for example, a human machine interface (HMI) and a communication interface (I/F). Each computer has a processor and a storage device. The storage device stores information (for example, a map, a formula, and various parameters) used in a program, in addition to the program executed in the processor. The HMI includes an input device and a display device. The HMI may be a touch panel display.

A power system PG is a power network constructed by a power transmission and distribution facility. A plurality of power generation plants is connected to the power system PG. The power system PG receives power supply from the power generation plants. In this embodiment, a power company maintains and manages the power system PG (a commercial power source). The power company corresponds to a transmission system operator (TSO). The power system PG supplies alternating current power (for example, three-phase alternating current power). The server 700 corresponds to a computer belonging to the TSO. The server 700 may be embedded with a middle supply system (a central power supply command center system) and a simple command system. The power system PG according to this embodiment corresponds to an example of an "external power supply" according to the present disclosure.

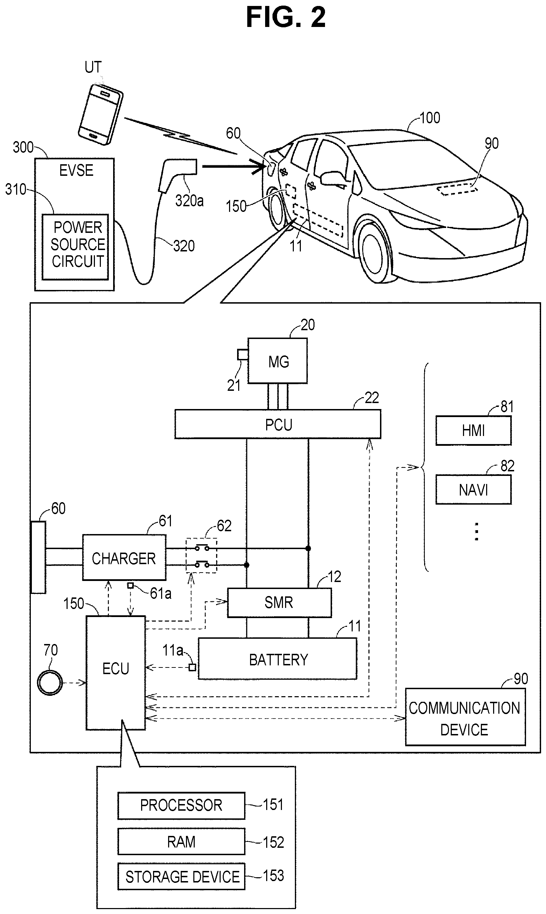

The server 500 periodically communicates with each vehicle included in vehicle group 1. In this embodiment, each vehicle included in the vehicle group 1 is an xEV (a battery electric vehicle), and is configured to be operable as an adjustment force of the power system PG. Each vehicle included in vehicle group 1 may be, for example, a privately owned vehicle (POV). The number of vehicles included in the vehicle group 1 may be 5 or more and less than 30, 30 or more and less than 100, or 100 or more. In this embodiment, it is assumed that the vehicle group 1 includes approximately 50 vehicles. The vehicle group 1 includes a vehicle 100 having a configuration (see FIG. 2) described below. The configurations of the vehicle 100 and other vehicles in the vehicle group 1 may be the same or different.

The EVSE group 2 includes a plurality of pieces of EVSE that receive power supply from the power system PG. The server 200 communicates with each EVSE as needed. The EVSE group 2 includes EVSE 300 having a configuration (see FIG. 2) described below. The EVSE group 2 may include a plurality of types of EVSEs (for example, a normal charger and a quick charger). The EVSE group 2 may include both public EVSE (for example, EVSE installed in commercial equipment, a car dealership, or a highway parking area) and non-public EVSE (for example, home EVSE). The number of pieces of EVSE included in the EVSE group 2 is arbitrary.

The management device 1000, the server 700, each vehicle included in the vehicle group 1, and each piece of EVSE included in the EVSE group 2 are configured to be able to communicate with each other via a communication network NW. The server 700 communicates with the server 200 via the communication network NW. In the management device 1000, the server 200 and the server 500 are configured to be able to communicate with each other. The communication network NW is a wide area network constructed by, for example, the Internet and a wireless base station. Each vehicle is configured to access and be connected to the communication network NW by wireless communication. Each piece of EVSE is connected to the communication network NW via, for example, a communication line. A communication form is not limited thereto and can be appropriately changed. For example, each piece of EVSE may be connected to the communication network NW by wireless communication.

FIG. 2 is a diagram illustrating configurations of the vehicle 100 and the EVSE 300. With reference to FIG. 2, the EVSE 300 is configured to receive power supply from the power system PG and supply power. The EVSE 300 is embedded with a power circuit 310 and includes a charging cable 320. The power circuit 310 is electrically connected to the power system PG. The charging cable 320 has a connector 320a (a plug) at a tip thereof, and includes a communication line and a power line therein. One electric wire may serve as both the communication line and the power line. The power circuit 310 converts power supplied from the power system PG into power suitable for power supply to the vehicle 100 and outputs the converted power to the charging cable 320. Power supplied by the EVSE 300 is output from the connector 320a.

The vehicle 100 includes an inlet 60 from which the connector 320a is detachable. When the connector 320a of the charging cable 320 connected to a main body of the EVSE 300 is connected to the inlet 60 of the vehicle 100 in a parked state, the vehicle 100 becomes a state (hereinafter, also referred to as a "plugged-in state") of being electrically connected to the power system PG via the EVSE 300. On the other hand, for example, during traveling of the vehicle 100, the vehicle 100 becomes a state (hereinafter, also referred to as a "plugged-out state") of being electrically unconnected to each of the EVSE 300 and the power system PG. FIG. 2 illustrates only the inlet 60 corresponding to a power supply method of the EVSE 300, but the vehicle 100 may include a plurality of inlets such that it can correspond to a plurality of types of power supply methods (for example, an alternating current method and a direct current method).

The vehicle 100 further includes a battery 11 , a system main relay (SMR) 12 , a motor generator (MG) 20 , a power control unit (PCU) 22 , and an electronic control unit (hereinafter, referred to as an "ECU") 150. The ECU 150 includes a processor 151, a random access memory (RAM) 152, and a storage device 153. The ECU 150 may be a computer. The processor 151 may be a central processing unit (CPU). The RAM 152 functions as a working memory that temporarily stores data processed by the processor 151. The storage device 153 is configured to be able to save the stored information. The storage device 153 stores information (for example, a map, a formula, and various parameters) used in a program, in addition to the program. In this embodiment, when the processor 151 executes the program stored in storage device 153, various pieces of control (for example, charging control of the battery 11) is executed in the ECU 150.

The battery 11 accumulates power for traveling of the vehicle 100. The vehicle 100 is configured to be able to travel using power accumulated in the battery 11. The vehicle 100 according to this embodiment is a battery electric vehicle (BEV) without an engine (an internal combustion engine). As the battery 11, a known power accumulation device (for example, a liquid secondary battery, an all-solid secondary battery, or an assembled battery) for a vehicle can be employed. Examples of the secondary batteries for a vehicle include a lithium-ion battery and a nickel-hydrogen battery. The battery 11 according to this embodiment corresponds to an example of a "power accumulation device" according to the present disclosure.

The vehicle 100 further includes a monitoring module 11a that monitors a state of the battery 11. The monitoring module 11a includes various sensors that detect the state (for example, voltage, current, and temperature) of the battery 11, and outputs detection results to the ECU 150. In addition to the above sensor function, the monitoring module 11a may be a battery management system (BMS) further having a state-of-charge (SOC) estimation function, a state-of-health (SOH) estimation function, a cell voltage equalization function, a diagnosis function, and a communication function. The ECU 150 can acquire the state of the battery 11 (for example, temperature, current, voltage, a SOC, and internal resistance) based on an output of the monitoring module 11a.

The vehicle 100 further includes a charger 61 (an in-vehicle charger) and a charging relay 62. Each of the charger 61 and the charging relay 62 is positioned between the inlet 60 and the battery 11. Each of the charger 61 and the charging relay 62 is controlled by the ECU 150. In this embodiment, a charging line including the inlet 60, the charger 61, and the charging relay 62 is connected between the SMR 12 and the PCU 22. However, the present invention is not limited thereto, and the charging line may be connected between the battery 11 and the SMR 12.

The charger 61 charges the battery 11 using power (for example, alternating current power) input from the outside of the vehicle to the inlet 60. The charger 61 includes a power conversion circuit. The power conversion circuit may be configured to execute alternating current/direct current conversion. The power conversion circuit may include at least one of a power factor correction (PFC) circuit, an inverter, an isolation circuit (for example, an isolation transformer), and a rectifier circuit. The charging relay 62 switches between connection/disconnection of an electric circuit from the inlet 60 to the battery 11. The vehicle 100 further includes a monitoring module 61a that monitors a state of the charger 61. The monitoring module 61a includes various sensors (for example, a current sensor and a voltage sensor) that detect the state (for example, charging power) of the charger 61, and outputs detection results to the ECU 150.

External charging (that is, charging the battery 11 with power from the outside of the vehicle) can be executed on the vehicle 100 in the plugged-in state. The vehicle 100 can execute power adjustment of the power system PG by the external charging. Power for the external charging is supplied from, for example, the power system PG through the charging cable 320 of the EVSE 300 to the inlet 60. The charging relay 62 becomes a closed state (a connected state) when the external charging is executed, and the charging relay 62 becomes an open state (a disconnected state) when the external charging is not executed.

The MG 20 may be, for example, a three-phase alternating current motor generator. The MG 20 functions as a motor used for traveling of the vehicle 100. The MG 20 is driven by the PCU 22 and causes drive wheels of the vehicle 100 to rotate. Further, the MG 20 executes regenerative power generation and outputs the generated power to the battery 11. The vehicle 100 further includes a motor sensor 21 that monitors a state of the MG 20. The motor sensor 21 includes various sensors (for example, a current sensor, a voltage sensor, and a temperature sensor) that detect the state of the MG 20 and outputs detection results to the ECU 150. The number of motors used for traveling included in the vehicle 100 is arbitrary, and may be one, two, three, or higher. The motor used for traveling may be an in-wheel motor.

The PCU 22 drives the MG 20 using power supplied from the battery 11. The SMR 12 switches between connection/disconnection of an electric circuit from the battery 11 to the PCU 22. The PCU 22 includes, for example, an inverter and a converter. Each of the SMR 12 and the PCU 22 is controlled by the ECU 150. The SMR 12 becomes the closed state (the connected state) during traveling of the vehicle 100. Further, the SMR 12 is becomes the closed state when power is exchanged between the battery 11 and the inlet 60 (and thus, the outside of the vehicle).

The ECU 150 is configured to be able to reserve a charging end time and a target SOC (a SOC at the charging end time) regarding timer charging. The ECU 150 of which the charging end time and the target SOC are reserved executes the timer charging. A fact that the charging end time and the target SOC are reserved for the vehicle means that the timer charging is reserved for the vehicle. The timer charging is charging according to a reserved charging schedule. Specifically, in the timer charging in the vehicle 100, the ECU 150 executes the charging control (control of the charger 61) of the battery 11 such that a SOC of the battery 11 reaches the target SOC at the reserved charging end time.

Each vehicle included in the vehicle group 1 is configured to be able to receive a reservation for the timer charging from a user and execute the reserved timer charging. Each vehicle included in the vehicle group 1 sends charging reservation information to the server 500. The charging reservation information indicates whether the timer charging is reserved for the vehicle. Further, the charging reservation information further indicates the charging end time and the target SOC reserved for the vehicle. When the timer charging is reserved, each vehicle included in the vehicle group 1 may send the charging reservation information to the server 500. In this embodiment, a vehicle for which the timer charging is reserved in the vehicle group 1 permits remote control of the power accumulation device by the server 200. On the other hand, a vehicle in the vehicle group 1 for which the timer charging is not reserved does not permit the remote control of the power accumulation device by the server 200. However, a condition for permitting the remote control is not limited thereto and can be appropriately changed.

The vehicle 100 further includes an HMI 81, a navigation system (hereinafter, also referred to as a "NAVI") 82, and a communication device 90. The battery 11 also supplies power directly or indirectly to these devices (auxiliaries).

The HMI 81 includes an input device and a display device. The HMI 81 may include a touch panel display. The HMI 81 may receive a reservation for the timer charging. The HMI 81 may include a meter panel and/or a head-up display. The HMI 81 may include a smart speaker that receives a voice input.

The NAVI 82 includes a touch panel display, a global positioning system (GPS) module, and a storage device (none of them shown). The storage device stores map information. The touch panel display receives an input from a user in the vehicle or displays a map and other information. A GPS module is configured to receive a signal (hereinafter, referred to as a "GPS signal") from a GPS satellite (not shown). The NAVI 82 detects a position of the vehicle 100 using the GPS signal. The NAVI 82 is configured to be able to display the position of the vehicle 100 on a map in real time. The NAVI 82 refers to the map information and executes a route search for finding the optimum route (for example, the shortest route) from a current position of the vehicle 100 to a destination. The NAVI 82 may sequentially update the map information by OTA.

The communication device 90 includes various communication I/Fs. The ECU 150 communicates with devices outside the vehicle 100 via the communication device 90. The communication device 90 includes a wireless communication device (for example, a data communication module (DCM)) that can access the communication network NW. The wireless communication device may include a communication I/F corresponding to Fifth Generation or Sixth Generation (a Fifth or Sixth Generation mobile communication system). The vehicle 100 wirelessly communicates with each of the servers 200 and 500 in, for example, both the plugged-in state and the plugged-out state. In this embodiment, the vehicle 100 receives a command or a notification from each of the servers 200 and 500 via the wireless communication device. However, the present disclosure is not limited thereto, and the vehicle 100 may communicate with each of the servers 200 and 500 in a wired manner via the EVSE 300 in the plugged-in state.

A mobile terminal UT is a terminal carried by the user of the vehicle 100. In this embodiment, as the mobile terminal UT, a smart phone provided with a touch panel display is employed. The smart phone is embedded with a computer. The communication device 90 includes a communication I/F used for direct communication with a mobile terminal UT present inside or within a range of surroundings of the vehicle 100. The communication device 90 and the mobile terminal UT may execute near-field communication, such as wireless local area network (LAN), near-field communication (NFC), or Bluetooth^{®}. As the mobile terminal UT, any mobile terminal can be employed and, for example, a laptop, a tablet terminal, a wearable device (for example, a smart watch or smart glasses), or an electronic key can also be employed. Further, as a communication method between the vehicle 100 and the mobile terminal UT, any communication method can be employed.

The mobile terminal UT is registered, in advance, with the servers 200, 500 and configured to be able to wirelessly communicate with the servers 200, 500. Predetermined application software (hereinafter, referred to as a "mobile application") is installed in the mobile terminal UT. The servers 200, 500 execute predetermined authentication before starting communication with mobile terminals, and are configured to communicate only with mobile terminals that have been successfully authenticated. As such, it is possible to restrict unauthorized communication by mobile terminals that are not registered in the servers 200, 500. By inputting predetermined authentication information (information for successful authentication) into the mobile terminal UT, the user of the vehicle 100 can start communication with the servers 200, 500. Further, by registering the predetermined authentication information in the mobile application, the input of the authentication information can be omitted. The mobile terminal UT can exchange information with the servers 200, 500 via the mobile application.

In this embodiment, the mobile terminal UT includes a position sensor. The position sensor may be a sensor using the GPS. The mobile terminal UT sends information (hereinafter, also referred to as "user position information") indicating the position of the user to the server 500 periodically or in response to a request from the server 500.

A vehicle system including the ECU 150 (a system that controls the vehicle 100) is turned on (operated)/off (stopped) by an operation of an activation switch 70 by the user. The activation switch 70 is installed in, for example, a cabin of the vehicle 100. By turning on the activation switch 70, the vehicle system is activated. Further, when the activation switch 70 is turned off while the vehicle system is operating, the vehicle system becomes a stopped state. However, in the vehicle 100 during traveling, the stopped operation of the activation switch 70 is prohibited. Generally, the activation switch of the vehicle is referred to as a "power switch" or an "ignition switch".

With reference to FIG. 1 again, the server 200 corresponds to a computer belonging to the aggregator. The aggregator is an electricity company that bundles a plurality of distributed energy resources (DERs) and provides energy management services. The server 200 is configured to control the vehicle group 1. Each vehicle included in the vehicle group 1 includes a power accumulation device configured to be electrically connectable to the power system PG (the external power source), and can function as the DER. By remotely and integrally controlling the DER (for example, each vehicle included in the vehicle group 1), the server 200 may cause the DER to function as a virtual power plant (VPP). The server 500 may belong to the aggregator or an automobile manufacturer.

The server 200 may implement demand response (DR) for each DER in order to integrally control the DER as the VPP. By the DR, the power adjustment of the power system PG is requested to the DER. Using the DR, the server 200 may execute the power adjustment of the power system PG requested from the server 700 or the power adjustment of the power system PG for which a bid is won in a power market on the DER (for example, each vehicle included in the vehicle group 1).

When the DER participates in the DR (the power adjustment), it is possible to give flexibility and academia to the power system PG. A manager (for example, the vehicle user) of the DER participating in the DR permits the remote control to the server 200. In a situation where the remote control of the DER by the server 200 is permitted, the server 200 can cause the DER to execute the charging or the discharging of the power adjustment of the power system PG by the remote control. For example, in the vehicle 100, the ECU 150 controls the charger 61 according to a command from the server 200. However, even when the server 200 sends the command to the DER, in a case where the DER has not completed preparation for the power adjustment, the DER cannot execute the power adjustment by the remote control.

The type of power adjustment executed by the DER is arbitrary. The power adjustment may be any one of, for example, supply and demand adjustment, power source stabilization, load following, or frequency adjustment. The DER may operate as an adjustment force or a reserve force for the power system PG by the remote control. The DR is roughly classified into an upper DR and a lower DR. The upper DR is basically a DR requesting for an increase in demand. However, when the requested DER is a power generation facility, the upper DR may request the DER for supply restriction. On the other hand, the lower DR is a DR that requests for demand restriction or reverse power flow.

In this embodiment, the server 200 includes a selection unit 210, a charging control unit 220, and a prediction unit 230. Each of these units is embodied with, for example, a processor and a program executed by the processor. However, the present disclosure is not limited thereto, and each of the units may be embodied by dedicated hardware (an electronic circuit).

The selection unit 210 is configured to select a plurality of target vehicles from among the vehicle group 1 before the start of a predetermined adjustment period. The adjustment period may be designated by the server 700 or a period contracted in the power market. The period contracted in the power market is also generally referred to as a "provision period". Further, a length of the provision period is also generally referred to as a "continuation period".

The charging control unit 220 is configured to control at least one of the target vehicles such that a total charging power of the power accumulation device included in each of the target vehicles electrically connected to the power system PG follows a target value within the adjustment period.

The prediction unit 230 is configured to predict movement of each vehicle included in the vehicle group 1. Details will be described below, but the selection unit 210 selects the target vehicles from among the vehicle group 1 using a result of movement prediction by the prediction unit 230. The prediction unit 230 acquires information for the movement prediction from the server 500 and executes the movement prediction.

The server 500 possesses information on each vehicle included in the vehicle group 1 (hereinafter, also referred to as "vehicle information"). The vehicle information is stored in the storage device of the server 500 and is sequentially updated. The server 500 periodically communicates with each vehicle included in the vehicle group 1 and sequentially receives the vehicle information from each vehicle. Then, the server 500 updates the vehicle information in the storage device based on the received latest vehicle information. The vehicle information is distinguished by a vehicle ID (vehicle identification information). The vehicle information includes, for example, a charging place, a specification of the EVSE installed at the charging place, user position information (a position of the vehicle user), the position information of the vehicle, a SOC of an in-vehicle battery, and a system connection state (the plugged-in state/the plugged-out state), charging reservation information, a vehicle system state (on/off), information set in the navigation system (for example, a traveling route to the destination), historical data on the movement of the vehicle (for example, data associating the position of the vehicle with time with respect to daily movement of the vehicle), and history data on behavior of the vehicle user. Further, when a specification of each vehicle is different, the specification (for example, the specification on charging) of each vehicle may be registered, in advance, in the server 500.

The charging place of the vehicle 100 illustrated in FIG. 2 may be the vehicle user's home (for example, a place in which the EVSE 300 is installed). In this embodiment, during traveling of the vehicle 100, each of the position of vehicle 100 and the SOC of the battery 11 is sequentially sent from the vehicle 100 to the server 500 in real time. Further, at a timing when the plugged-in state and the plugged-out state are switched in the vehicle 100, the vehicle 100 sends the latest system connection state to the server 500. Further, at a timing when the on and off states of the vehicle system are switched in the vehicle 100, the vehicle 100 sends the latest vehicle system state to the server 500. Further, when the destination is set in the NAVI 82, the vehicle 100 sends the traveling route searched for by the NAVI 82 to the server 500.

The server 200 can acquire the vehicle information described above from the server 500. The server 500 sends the vehicle information to the server 200 in, for example, response to a request from the server 200. Further, the server 500 may periodically send the vehicle information to the server 200.

When the vehicle system is switched from the on state to the off state, the prediction unit 230 of the server 200 may estimate that the vehicle is in the parked state. When the parked state of the vehicle is continued for a predetermined time or longer, the prediction unit 230 may estimate that the vehicle exists at the user's home or workplace. The prediction unit 230 may determine whether the user is aboard the vehicle, based on the position information of the vehicle and the user position information. The prediction unit 230 may predict, using the user position information, the user's behavior thereafter while tracking the position of the user after exiting the vehicle. The prediction unit 230 may predict an action schedule of the user from history data (for example, weather information, traffic congestion information, and past position data separately managed according to the day of the week) on the action of the user. When the vehicle system is switched from the off state to the on state, the prediction unit 230 may predict that the vehicle departs a predetermined time later. The prediction unit 230 may acquire a traveling plan from information set in the navigation system. Examples of the traveling plan include a departure point, a departure time from the departure point, a destination, an arrival time at the destination, and the traveling route to the destination. The prediction unit 230 may predict the arrival time of the vehicle at the destination and a remaining battery amount at a time of arrival while tracking the position of the vehicle using the position information of the vehicle. The prediction unit 230 may predict a movement schedule of the vehicle from history data (for example, the weather information, the traffic congestion information, and past position data separately managed according to the day of the week) on the movement of the vehicle.

On a day of the adjustment period, the charging control unit 220 determines whether the preparation for the power adjustment is completed for each target vehicle, based on the vehicle information of each target vehicle received from the server 500. Hereinafter, the target vehicle for which the preparation for the power adjustment is completed is also referred to as a "standby vehicle".

When the target vehicle satisfies a predetermined requirement (hereinafter, also referred to as a "standby requirement"), the charging control unit 220 determines that the preparation for the target vehicle is ready for the power adjustment. The standby requirement according to this embodiment includes a fact that the target vehicle is in the plugged-in state in a predetermined charging place (for example, a charging place indicated by the vehicle information described above). For example, as illustrated in FIG. 2, when the connector 320a of the charging cable 320 connected to a main body of the EVSE 300 installed at a predetermined charging place is connected to the inlet 60 of the vehicle 100, the vehicle 100 satisfies the standby requirement by becoming the plugged-in state and becoming a standby mode. The vehicle 100 in the plugged-in state is electrically connected to the power system PG.

Hereinbelow, processing executed by the server 200 for an operation of the vehicle group 1 as the control power of the power system PG that has won a bid in the power market will be described below. Hereinbelow, as an example of the adjustment force that has won a bid in the power market, a tertiary adjustment force-2 will be described.

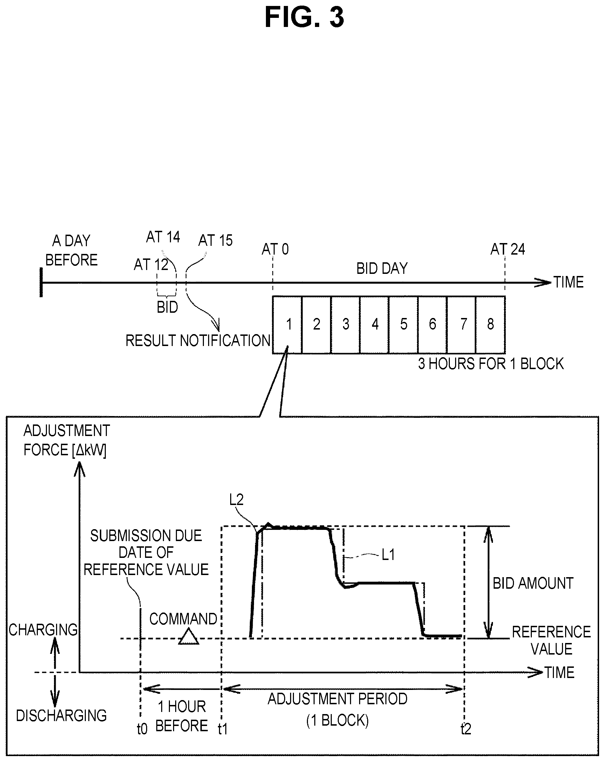

FIG. 3 is a diagram illustrating an overview of the tertiary adjustment force-2. With reference to FIG. 3, the tertiary adjustment force-2 is the adjustment force for a feed-in tariff (FIT) special system, and is transacted in a supply and demand adjustment market. In the supply and demand adjustment market, a transaction of power as a product is executed. Each product is bought and sold by, for example, a bidding method. The tertiary adjustment force-2 corresponds to a replacement reserve for the feed-in tariff (RR-FIT), and has a response time of within 45 minutes and a continuation time of 3 hours (6 frames). In the supply and demand adjustment market, the transaction of the tertiary adjustment force-2 is executed in each of eight blocks in which one day is divided into 3-hour units.

In the FIT special system, the TSO is responsible for an imbalance in a power generation plan. The TSO predicts a renewable energy output two days before a target block (the adjustment period) and decides a power generation plan value. Then, the TSO delivers the tertiary adjustment force-2 for canceling an error in the renewable energy prediction (a prediction error of two days before) the day before the target block. Renewable energy means energy that can be generated again.

The aggregator makes a bid within a period from 12:00 to 14:00 the day before the target block (the adjustment period) in the supply and demand adjustment market. Specifically, using the server 200, the aggregator sends, to a supply and demand adjustment market system, bid information including a product (for example, the tertiary adjustment force-2), a block (any one of the eight blocks), a bid amount (ΔkW), identification information of the target vehicle (a vehicle ID), and a charging place of the target vehicle. A result will be notified to a bidder at 15:00 on a day of the bid. When the bid for the product has been won, the contract is concluded. A ΔkW contracted amount corresponds to a winning bid amount.

A person (a winning bidder) who has won the bid for the tertiary adjustment force-2 in the supply and demand adjustment market adjusts power within a range (hereinafter, also referred to as a "winning bid range") of the winning bid amount set with respect to a reference value (kW). In this embodiment, the aggregator bids for the tertiary adjustment force-2 on a charging side. Then, the aggregator becomes the winning bidder. The winning bidder registers the reference value in the supply and demand adjustment market system by a predetermined time t0 (for example, one hour before a start time of the target block for which the bid has been won). Time t0 corresponds to a deadline of submission of the reference value. In this embodiment, the reference value on the charging side is registered. The server 200 belonging to the winning bidder sequentially receives, from the server 700, a target value (for example, a charging command value L1 illustrated in FIG. 3) arbitrarily requested by the server 700 within the winning bid range in the target block (for example, the adjustment period t1 to t2 illustrated in FIG. 3) for which the bid has been won. Then, the charging control unit 220 of the server 200 controls at least one of the target vehicles such that the total charging power (for example, a charging power value L2 illustrated in FIG. 3) of the power accumulation device included in each of the target vehicles electrically connected to the power system PG (the external power source) follows the target value in the adjustment period t1 to t2. A difference between the reference value (kW) and the charging power value L2 (kW) corresponds to the adjustment force (ΔkW) of the power system PG provided by the target vehicles.

Specifically, when the charging command value L1 is changed in adjustment period t1 to t2, the charging control unit 220 changes the charging power value L2 to that value within the response time (45 minutes) of a product requirement. When the charging command value L1 is continued at the same value in the adjustment period t1 to t2, the charging control unit 220 controls the charging power value L2 according to the command at least during the continuation time of the product requirement. After the end of the adjustment period t1 to t2, the server 200 sends performance data (the charging power value L2) in the adjustment period t1 to t2 to the server 700 (the TSO server). In the adjustment period t1 to t2, the TSO confirms that the winning bidder is maintaining a state in which deliverance of the ΔkW contracted amount (the winning bid amount) is possible and the winning bidder is adjusting (response performance) power according to the charging command value L1 within the winning bid range. When at least one of an assessment (assessment I) of whether the deliverance of the ΔkW contracted amount is possible and an assessment (assessment II) of the response performance proves to be inappropriate for the product requirement, a predetermined penalty is imposed on the winning bidder.

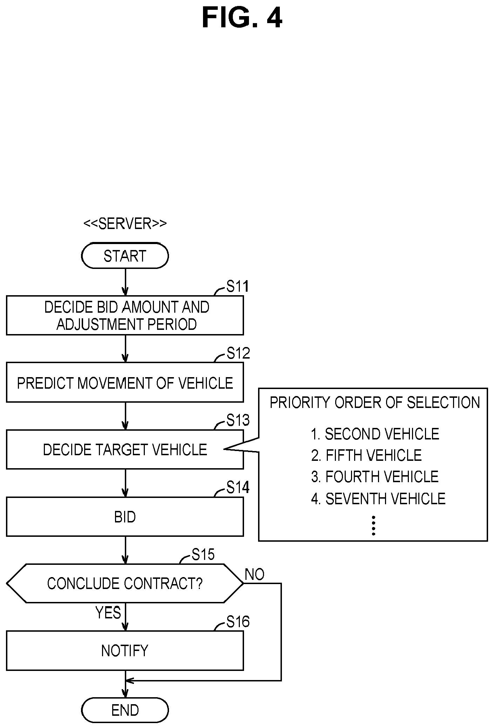

FIG. 4 is a flowchart illustrating processing on market transaction executed by the server 200. The processing illustrated in the flowchart is executed when a predetermined condition is satisfied. The predetermined condition may be satisfied at a predetermined time or may be periodically satisfied. The predetermined condition may be satisfied when the server 200 receives a bid instruction from the user. The server 200 may decide a timing appropriate for the bidding based on at least one of a market price, the weather information (including forecast information), and demand history of the vehicle group 1, and execute the processing illustrated in FIG. 4 at the timing appropriate for bidding. Hereinbelow, each step in the flowchart is simply written as "S".

With reference to FIG. 4 together with FIGS. 1 and 2, in S11, the prediction unit 230 acquires the product (a type of the power adjustment), the adjustment period (the target block), and the bid amount (ΔkW) on the bidding. These pieces of information may be input to the server 200 by the aggregator via the HMI.

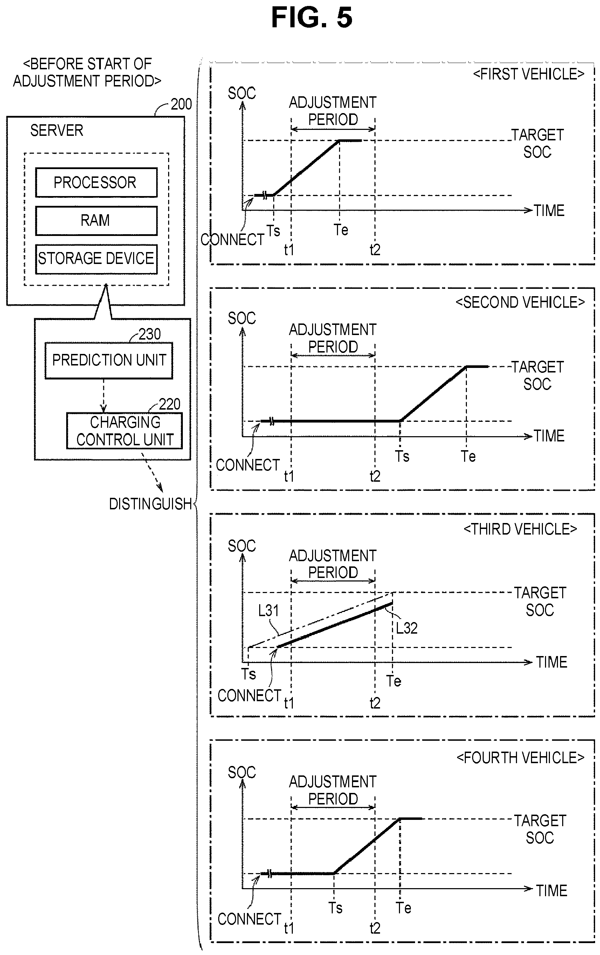

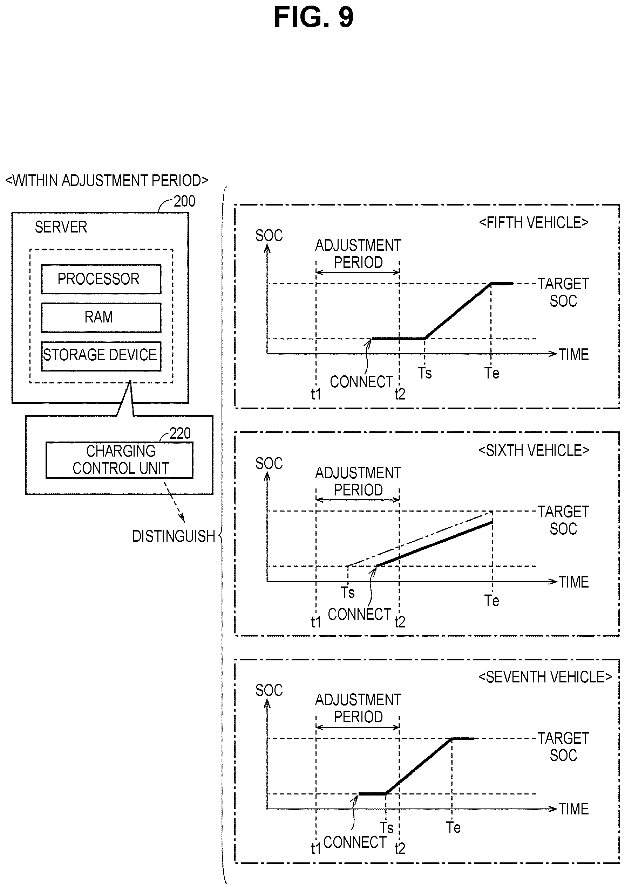

Subsequently in S12, the prediction unit 230 acquires vehicle information of each vehicle included in the vehicle group 1 from the server 500, and predicts a future movement of each vehicle included in the vehicle group 1 using the acquired vehicle information. Specifically, the prediction unit 230 predicts the future movement of the vehicle using at least one of transition of the position and the SOC of the vehicle, the traveling plan of the vehicle, and the history data on the movement of the vehicle. Then, the prediction unit 230 predicts which of the first to seventh vehicles (see FIGS. 5 and 9) described below for each vehicle included in the vehicle group 1 will be for the adjustment period acquired in S11. A vehicle for which the timer charging is predicted to be not reserved by the start time of the adjustment period is predicted to be none of the first to seventh vehicles. The prediction unit 230 may predict the behavior of the vehicle user (for example, whether to reserve the timer charging) using the historical data on the behavior of the vehicle user.

Subsequently in S13, the selection unit 210 selects the target vehicles that execute the power adjustment (that is, the power adjustment of the power system PG according to the requirement acquired in S11) on the bidding, using the result of the movement prediction by the prediction unit 230. More specifically, the selection unit 210 selects the vehicles from among the vehicle group 1 according to a priority order (the order of the second vehicle, the fifth vehicle, the fourth vehicle, and the seventh vehicle) described below, and sends the information (for example, the adjustment period and a reward given to the vehicle user as a compensation for the power adjustment) on the power adjustment on the bidding to a user terminal of the vehicle, and requests a reply from the user who approves participation in the power adjustment. When the vehicle user sends a reply to the request, the vehicle is confirmed as the target vehicle. As such, the selection unit 210 selects a sufficient number of target vehicles for the power adjustment from among the vehicle group 1. The selection unit 210 selects the target vehicles corresponding to the adjustment force (the adjustment force in which a margin is added to the bid amount) larger than the bid amount such that the remaining target vehicles can complete the power adjustment even when some of the selected target vehicles deviate from the power adjustment. The margin of the adjustment force may be updated by learning. The user terminal that receives the notification (the request for a reply) from the server 200 may be a terminal mounted on the vehicle (for example, the HMI 81 or the NAVI 82 illustrated in FIG. 2), or a terminal carried by the vehicle user (for example, the mobile terminal UT illustrated in FIG. 2). The same can be said for a user terminal in S16 described below.

The selection unit 210 preferentially selects the vehicle predicted to be the second vehicle (FIG. 5) in S12 as the target vehicle. Details will be described below, but the second vehicle corresponds to a vehicle reserved for the timer charging by the start time of the adjustment period, and maintains the plugged-in state (the state of being electrically connected to the power system PG) throughout the adjustment period. When the vehicle predicted to be the second vehicle cannot secure a sufficient adjustment force, the selection unit 210 selects the vehicle predicted to be the fifth vehicle (FIG. 9). When the number of target vehicles is still insufficient, the selection unit 210 selects the vehicle predicted to be the fourth vehicle (FIG. 5) as the target vehicle. Further, the selection unit 210 may select the vehicle predicted to be the seventh vehicle (FIG. 9) as the target vehicle. However, the method of selecting the target vehicles is not limited thereto, can be appropriately changed. A priority condition for selecting the target vehicles may be arbitrarily set by the aggregator.

Subsequently in S14, the server 200 makes a bid. Specifically, the charging control unit 220 sends the bid information to the supply and demand adjustment market system. The bid information includes the information (the product, the adjustment period, and the bid amount) acquired in S11. Further, the bid information includes the identification information (the vehicle ID) and the charging place of each target vehicle decided in S13. The charging place may be specified by coordinate values (the latitude and longitude), or by identification information (a meter ID) of a watt-hour meter installed in the charging place. The server 200 may acquire information on each target vehicle from the server 500.

Subsequently in S15, the charging control unit 220 determines whether the bid for the product (for example, the tertiary adjustment force-2) has been won. When the bid for the product has not been won (NO in S 15), the series of processes illustrated in FIG. 4 ends. On the other hand, when the bid for the product has been won (YES in S15), the process proceeds to S16.

In S16, the charging control unit 220 notifies the server 700 of the above-described bid information including the information on the product for which the bid has been won. As such, the server 700 is notified of a list pattern indicating a resource (the target vehicle) for the power adjustment corresponding to the product for which the bid has been won.

Further, in S16, the charging control unit 220 notifies the user terminal of each target vehicle of the adjustment period (the start time and the end time), and requests the vehicle user to put the vehicle into a state of being reserved for the timer charging. The user terminal of the target vehicle for which the timer charging has not been reserved may display an input screen for receiving a reservation for the timer charging. As such, the server 200 is configured to bid for the adjustment force in the power market (S14) and sends a notification for causing the target vehicles selected from among the vehicle group 1 to operate as the adjustment forces on which the contract has been made in the power market (S16). Hereinafter, the adjustment period of the product for which the bid has been made and won by the processing illustrated in FIG. 4 is referred to as a "contract period." In this embodiment, the bid for the tertiary adjustment force-2 is won. In other words, the contract period corresponds to the adjustment period t1 to t2 illustrated in FIG. 3.

In the server 200 according to this embodiment, the charging control unit 220 distinguishes the first to fourth vehicles from among the target vehicles (more specifically, the target vehicles selected for the contract period by the processing illustrated in FIG. 4) before the start of the contract period. Hereinafter, for convenience of the description, it is assumed that each of all the target vehicles has the configuration illustrated in FIG. 2 (the same configuration as that of the vehicle 100).

The charging control unit 220 is configured to acquire the charging start time (hereinafter, referred to as "Ts") that satisfies both the reserved charging end time (hereinafter, referred to as "Te") and the target SOC for the target vehicle for which the timer charging has been reserved. Ts corresponds to the charging start time for the SOC of the battery 11 (the power accumulation device) in the target vehicle to reach the target SOC at the charging end time. The charging control unit 220 may calculate Ts corresponding to Te reserved for the target vehicle and the target SOC, using a charging specification (for example, rated charging power) of the target vehicle and a specification (for example, rated charging power) of the EVSE installed at the charging place.

FIG. 5 is a diagram for describing the first to fourth vehicles. With reference to FIG. 5, the first vehicle is a vehicle of which Te has been reserved in the contract period (t1 to t2). The second vehicle is a vehicle of which Ts is after the end time (t2) of the contract period, and is electrically connected to the power system PG before the start time (11) of the contract period. The third vehicle is a vehicle of which Te is after the end time (t2) of the contract period, and is electrically connected to the power system PG before the start time (11) of the contract period and after Ts. A line L31 in FIG. 5 indicates the transition of the SOC according to a schedule of the timer charging reserved for the third vehicle. A line L32 in FIG. 5 indicates the transition of the SOC when the third vehicle executes the immediate charging. The fourth vehicle is a vehicle of which Ts is within the contract period (t1 to t2), and is electrically connected to the power system PG before the start time (11) of the contract period.

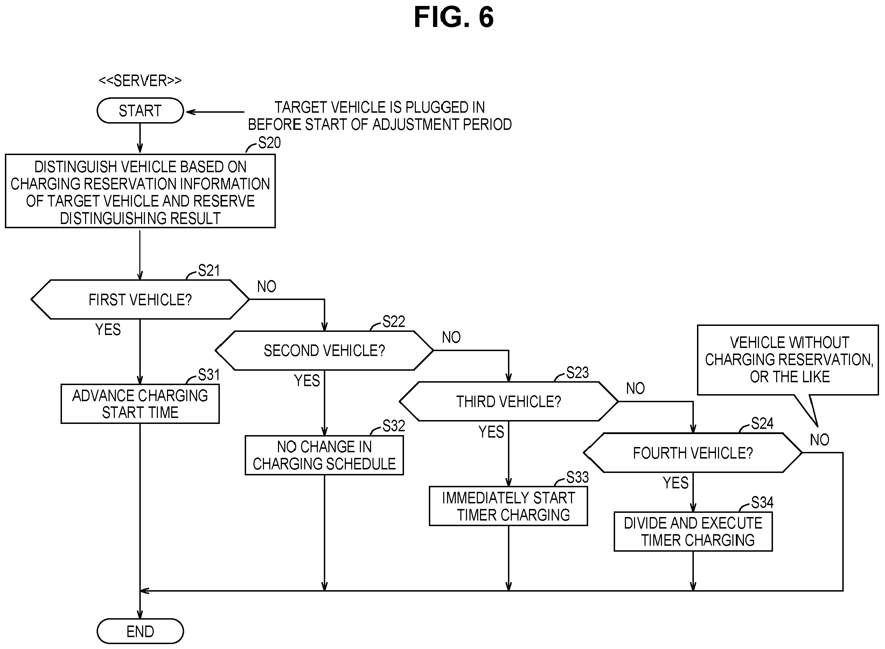

FIG. 6 is a flowchart illustrating processing on distinguishing the first vehicle executed by the server 200. The processing illustrated in this flowchart is executed for each target vehicle. In this embodiment, when the target vehicle becomes the plugged-in state before the start of the contract period, a series of processes illustrated in FIG. 6 that is described below is started on that target vehicle (that is, the target vehicle electrically connected to the power system PG before the start of the contract period).

With reference to FIG. 6 together with FIGS. 1 and 2, in S20, the charging control unit 220 acquires the information (the vehicle information) on the target vehicle from the server 500, and distinguishes the vehicles based on the acquired vehicle information. Specifically, the charging control unit 220 first determines, based on the charging reservation information, whether the timer charging is reserved for the target vehicle. For the target vehicle for which the timer charging has been reserved, the charging control unit 220 calculates Ts using the charging reservation information (Te and the target SOC) and the charging specification, and determines, using the calculated Ts, whether the target vehicle corresponds to each of the first to fourth vehicles. Then, information indicating a distinguishing result (hereinafter, also referred to as "first distinguishing information") is associated with the vehicle ID of the target vehicle, and stored in the storage device of the server 200. The first distinguishing information indicates whether the timer charging is reserved for the target vehicle. Further, the first distinguishing information indicates a classification of the vehicles to which the target vehicle corresponds (the "first vehicle", the "second vehicle", the "third vehicle", the "fourth vehicle", or "others"). "Others" means that the target vehicle does not correspond to any of the first to fourth vehicles.

Thereafter, in S21, S22, S23, and S24, the charging control unit 220 determines whether the target vehicles correspond to the first vehicle, the second vehicle, the third vehicle, and the fourth vehicle, respectively.

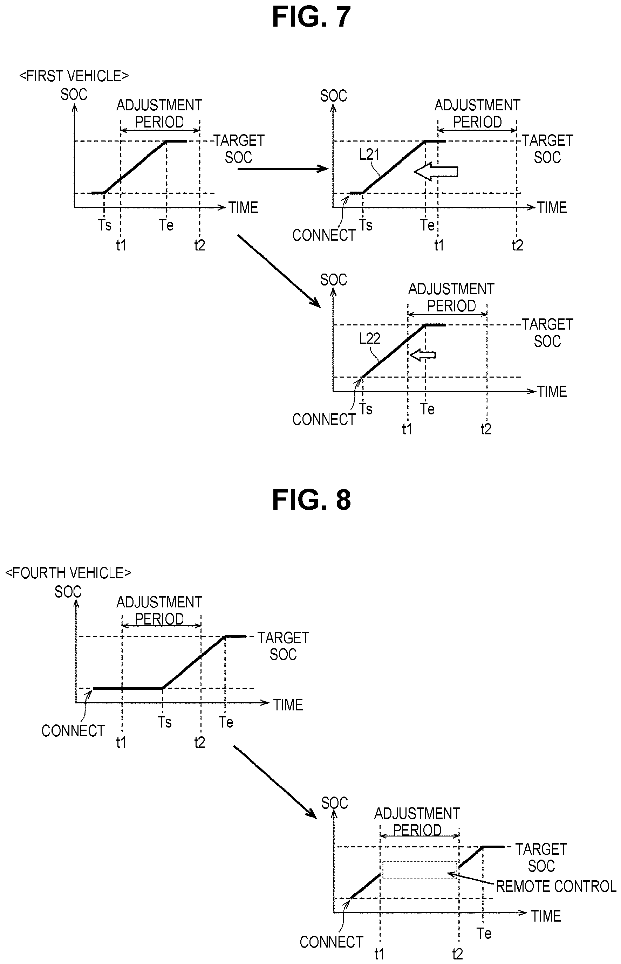

When the target vehicle corresponds to the first vehicle (YES in S21), in S31, the charging control unit 220 advances the charging start time of the battery 11 included in the target vehicle (the first vehicle). FIG. 7 is a diagram for describing the process of S31. With reference to FIG. 7, as represented by a line L21, the charging control unit 220 basically advances the start of the charging of the battery 11 included in the first vehicle such that the charging is completed before the start of the contract period. However, when a margin time until the start time (t1) of the contract period is insufficient and the charging cannot be completed before the start of the contract period, as represented by a line L22, the charging control unit 220 sets a current time as the charging start time of the battery 11 included in the first vehicle such that the charging is completed as early as possible. In this case, the first vehicle executes the immediate charging of the battery 11. By changing the charging start time, the charging in the first vehicle is early completed. The charging in the first vehicle is completed only by the timer charging. In other words, the first vehicle is excluded from the power adjustment in the contract period.

In S31, the server 200 (the charging control unit 220) sends a signal (hereinafter, also referred to as a "schedule change signal") requesting for a schedule change of the timer charging to the target vehicle. The target vehicle changes the schedule (for example, Ts and Te) of the timer charging in response to a request (the schedule change signal) from the server 200. In this manner, the schedule of the timer charging in the target vehicle is changed (see FIG. 7). In each of S33 and S34 described below, the server 200 also changes the schedule of the timer charging in the target vehicle by sending the schedule change signal.

With reference to FIG. 6 together with FIGS. 1 and 2 again, when the target vehicle corresponds to the second vehicle (NO in S21 and YES in S22), the charging control unit 220 ends the series of processes illustrated in FIG. 6 without changing the schedule of the timer charging reserved for the target vehicle (the second vehicle) (S32).

When the target vehicle corresponds to the third vehicle (NO in S21, S22 and YES in S23), in S33, the charging control unit 220 changes the schedule of the timer charging reserved for the target vehicle (the third vehicle) such that the immediate charging of the battery 11 is executed. In other words, the current time is set as the charging start time. As such, the third vehicle executes the immediate charging of the battery 11 as represented by the line L32 in FIG. 5. The timer charging of the battery 11 included in the third vehicle is continued from when the target vehicle is electrically connected to the power system PG until Te (no change). The third vehicle executes the timer charging of the battery 11 throughout the contract period. In other words, the third vehicle is excluded from the power adjustment in the contract period.

When the target vehicle corresponds to the fourth vehicle (NO in S21 to S23 and YES in S24), in S34, the charging control unit 220 changes the schedule of the timer charging reserved for the target vehicle (the fourth vehicle). FIG. 8 is a diagram for describing a process of S34. With reference to FIG. 8, the charging control unit 220 changes the charging schedule of the target vehicle such that the timer charging reserved for the fourth vehicle is divided into first charging before the contract period and second charging after the contract period. For the fourth vehicle, the current time and the start time (11) of the contract period are set as the charging start time and the charging end time of the first charging, respectively. The first charging is continued from the time when the fourth vehicle is electrically connected to the power system PG until the start time of the contract period. Further, for the fourth vehicle, the end time (t2) of the contract period and Te (no change) are set as the charging start time and the charging end time of the second charging, respectively. As the first charging, the fourth vehicle executes the immediate charging of the battery 11. Then, when the start time of the contract period arrives, the timer charging (the first charging) is temporarily ended. The fourth vehicle executes the charging of the battery 11 according to the instruction (the remote control) from the server 200 within the contract period, and restarts the timer charging (the second charging) when the contract period is ended.

With reference to FIG. 6 together with FIGS. 1 and 2 again, when the target vehicle does not correspond to any of the first to fourth vehicles (NO in all of S21 to S24), the series of processes illustrated in FIG. 6 ends. The target vehicle that does not correspond to any of the first to fourth vehicles corresponds to "others" and is excluded from the power adjustment in the contract period. For example, the target vehicle for which the timer charging is not reserved (hereinafter, also referred to as a "vehicle without reservations") corresponds to "others." When the vehicle without reservations becomes the plugged-in state, it executes the immediate charging of the battery 11. Further, the vehicle without reservations executes the charging of the battery 11 according to an instruction from the user. The user can execute an instruction for the charging start to the vehicle without reservations by operating, for example, the mobile terminal UT.

In the server 200 according to this embodiment, the charging control unit 220 distinguishes the fifth to seventh vehicles from among the target vehicles within the contract period. FIG. 9 is a diagram for describing the fifth to seventh vehicles. With reference to FIG. 9, the fifth vehicle is a vehicle of which Ts is after the end time (t2) of the contract period and is electrically connected to the power system PG during the contract period (t1 to t2). The sixth vehicle is electrically connected to the power system PG within the contract period (t1 to t2) and after Ts. The seventh vehicle is electrically connected to the power system PG before Ts within the contract period (t1 to t2) and after the start time (11) of the contract period.

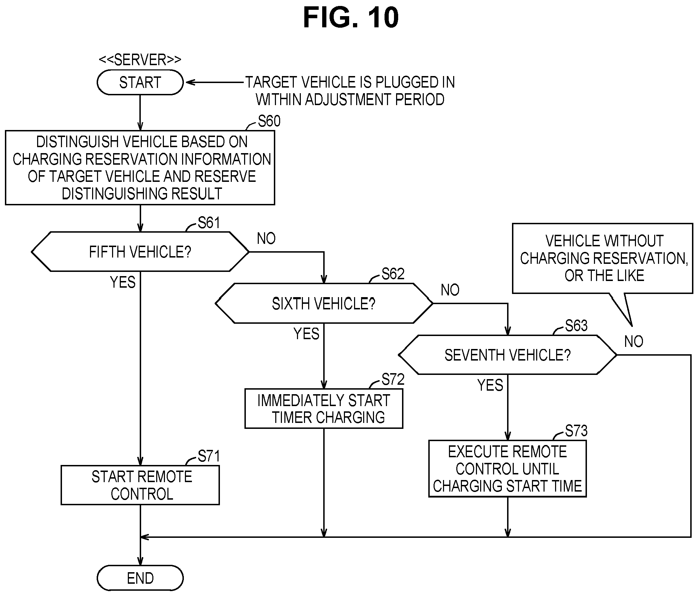

FIG. 10 is a flowchart illustrating processing on distinguishing the second vehicle executed by the server 200. The processing illustrated in this flowchart is executed for each target vehicle. In this embodiment, when the target vehicle becomes the plugged-in state within the contract period, a series of processes illustrated in FIG. 10 that is described below is started on that target vehicle (that is, the target vehicle electrically connected to the power system PG within the contract period).

With reference to FIG. 10 together with FIGS. 1 and 2, in S60, the charging control unit 220 acquires the information (the vehicle information) on the target vehicle from the server 500, and distinguishes the vehicles based on the acquired vehicle information. Specifically, the charging control unit 220 first determines, based on the charging reservation information, whether the timer charging is reserved for the target vehicle. For the target vehicle for which the timer charging has been reserved, the charging control unit 220 calculates Ts using the charging reservation information (Te and the target SOC) and the charging specification, and determines, using the calculated Ts, whether the target vehicle corresponds to each of the fifth to seventh vehicles. Then, information indicating a distinguishing result (hereinafter, also referred to as "second distinguishing information") is associated with the vehicle ID of the target vehicle, and stored in the storage device of the server 200. The second distinguishing information indicates whether the timer charging is reserved for the target vehicle. Further, the second distinguishing information indicates the classification of the vehicles to which the target vehicle corresponds (the "fifth vehicle", the "sixth vehicle", the "seventh vehicle", or "others"). "Others" means that the target vehicle does not correspond to any of the fifth to seventh vehicles.

Thereafter, in S61, S62, and S63, the charging control unit 220 determines whether the target vehicles correspond to the fifth vehicle, the sixth vehicle, and the seventh vehicle, respectively.

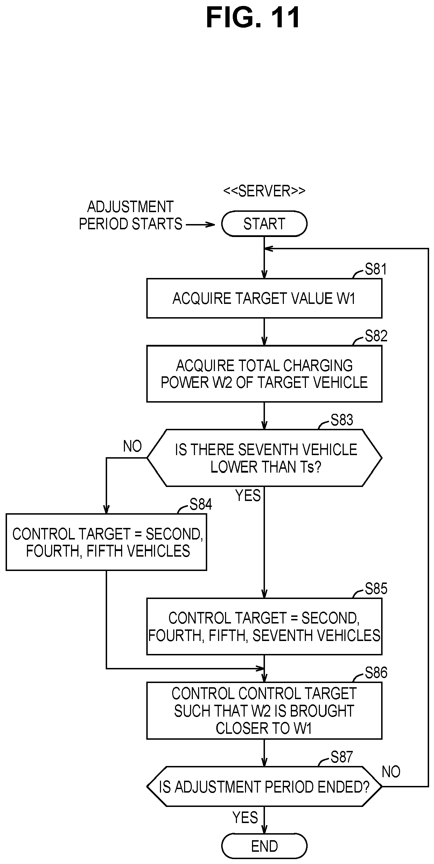

When the target vehicle corresponds to the fifth vehicle (YES in S61), in S71, the charging control unit 220 starts the remote control (see FIG. 11, described below) of the battery 11 included in the target vehicle (the fifth vehicle).

When the target vehicle corresponds to the sixth vehicle (NO in S61 and YES in S62), in S72, the charging control unit 220 changes the schedule of the timer charging reserved for the target vehicle (the sixth vehicle) such that the immediate charging of the battery 11 is executed. In other words, the current time is set as the charging start time. As such, the sixth vehicle executes the immediate charging of the battery 11. The timer charging in the sixth vehicle is continued even after the contract period is ended. In other words, the sixth vehicle is excluded from the power adjustment in the contract period.

When the target vehicle corresponds to the seventh vehicle (NO in S61, S62 and YES in S63), in S73, the charging control unit 220 starts the remote control (see FIG. 11, described below) of the battery 11 included in the target vehicle (the seventh vehicle). However, Ts reserved for the seventh vehicle is set as the end time of the remote control of the seventh vehicle. Ts (the end time of the remote control) reserved for the seventh vehicle is associated with a vehicle ID of the seventh vehicle and stored in the storage device of the server 200.

When the target vehicle does not correspond to any of the fifth to seventh vehicles (NO in all of S61 to S63), the series of processes illustrated in FIG. 10 ends. The target vehicle that does not correspond to any of the fifth to seventh vehicles corresponds to "others" and is excluded from the power adjustment in the contract period.

FIG. 11 is a flowchart illustrating processing on the power adjustment of the power system PG executed by the server 200. The processing illustrated in this flowchart is started when the start time of the contract period (the adjustment period) arrives.

With reference to FIG. 11 together with FIGS. 1 and 2, in S81, the charging control unit 220 acquires a target value (hereinafter, referred to as a "target value W1") of the charging control. Specifically, within the contract period, the server 700 decides an arbitrary target value W1 within the range (that is, the bid range having a lower limit defined by the reference value and an upper limit defined by the bid amount) illustrated in FIG. 3, and requests the server 200 to bring a total charging power W2 (S82, described below) closer to the target value W1. The server 700 sequentially sends the signals indicating the target values W1 to the server 200. The server 200 sequentially receives the target values W1 to the server 700. In S81, the charging control unit 220 acquires the latest target value W1.

Subsequently in S82, the charging control unit 220 acquires the total charging power (hereinafter, referred to as the "total charging power W2") of the battery 11 included in each of the target vehicles electrically connected to the power system PG. The charging power (more specifically, the charging power of the battery 11 using power supplied from the power system PG) of the battery 11 included in the target vehicle may be measured by the watt-hour meter installed in the charging place, and sent to the server 200. The watt-hour meter installed in the charging place may be a smart meter installed at a power reception point, or may be a watt-hour meter built into the EVSE. The total charging power W2 corresponds to a total value of the charging power of all the target vehicles measured by the watt-hour meters installed in respective charging places.

Subsequently in S83, from among the target vehicles electrically connected to the power system PG, the charging control unit 220 determines whether there is a seventh vehicle (hereinafter, referred to as a "seventh vehicle that has not reached Ts") of which the end time (Ts) of the remote control has not arrived. In S83, the "seventh vehicle" corresponds to the target vehicle distinguished to correspond to the "seventh vehicle" by the processes illustrated in FIG. 10.

When there is no seventh vehicle of which Ts has not arrived (NO in S83), in S84, the charging control unit 220 sets the second vehicle, the fourth vehicle, and the fifth vehicle as control targets. Even when there is no seventh vehicle, in S83, it is determined to be NO.

On the other hand, when there is a seventh vehicle of which Ts has not arrived (YES in S83), in S85, the charging control unit 220 sets the seventh vehicle of which Ts has not arrived, in addition to the second vehicle, the fourth vehicle, and the fifth vehicle, as the control targets.

Upon deciding the control target in S84 or S85, the charging control unit 220 controls the control target such that, in subsequent S86, the total charging power W2 is brought closer to the target value W1. Specifically, the charging control unit 220 decides the charging power (hereinafter, referred to as "requested charging power") allocated to the control target based on the target value W1 and the total charging power W2, and sends a charging command indicating the requested charging power to the control target. The charging control unit 220 decides the requested charging power for each control target, and sends the charging command to each control target. The charging control unit 220 may decide the requested charging power for each control target using at least one of the charging specification, the current SOC, and the charging reservation information of each control target. The ECU 150 of the control target that has received the charging command from the server 200 executes the charging control of the battery 11 according to that charging command. In other words, the ECU 150 controls the charger 61 such that the charging power of the battery 11 is brought closer to the requested charging power. Instead of the requested charging power, the charging control unit 220 may decide an ON (execution)/OFF (stop) charging command for each control target. The charging control unit 220 may execute charging ON/OFF control for each control target such that the total charging power W2 is brought closer to the target value W1.

As above, in S86, the charging control unit 220 executes the remote control of each control target for the power adjustment of the power system PG. Since the timer charging executed by the target vehicle other than the control targets within the contract period (the adjustment period) is not the charging for the power adjustment, it becomes a disturbance for the power adjustment. An influence of such a disturbance is offset by charging restriction (for example, charging stop) of the battery 11 in the control target.

Subsequently in S87, the charging control unit 220 determines whether the end time of the contract period has arrived. When the contract period is not ended (NO in S87), the process returns to the first step (S81). Within the contract period, when the processes of S81 to S86 are repeatedly executed, the power adjustment of the power system PG is executed by the control target.

Then, when the contract period is ended (YES in S87), a series of processes illustrated in FIG. 11 ends. After the end of the contract period, the aggregator may give an incentive to the user of the target vehicle (the control target) that has executed the power adjustment.

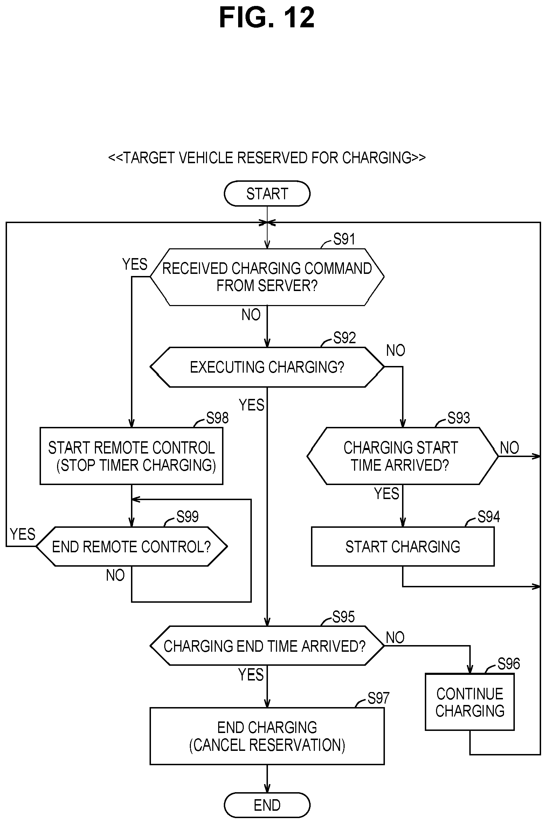

FIG. 12 is a flowchart illustrating processing on the timer charging executed by the target vehicle (a vehicle with a reservation) for which the timer charging is reserved. For example, when the target vehicle for which timer charging has been reserved becomes the plugged-in state, the ECU 150 of that target vehicle starts a series of processes illustrated in FIG. 12 described below.

With reference to FIG. 12 together with FIGS. 1 and 2, in S91, the ECU 150 determines whether the target vehicle has received the charging command from the server 200 (S86 in FIG. 11). When the target vehicle has not received the charging command (NO in S91), in S92, the ECU 150 determines whether the battery 11 is being charged. When the battery 11 is not being charged (NO in S92), in S93, the ECU 150 determines whether the charging start time (Ts) of the timer charging has passed. When Ts has already arrived (YES in S93), in S94, the ECU 150 starts the charging (the timer charging) of the battery 11. Thereafter, the process returns to the first step (S91). Further, when Ts has not arrived (NO in S93), the process also returns to S91.

When the battery 11 is not being charged (YES in S92), in S95, the ECU 150 determines whether the charging end time (Te) of the timer charging has passed. When Te has not arrived (NO in S95), in S96, the ECU 150 continues the timer charging. During the timer charging, the ECU 150 controls the charger 61. On the other hand, when Te has already arrived (YES in S95), in S97, the ECU 150 ends the charging (the timer charging) of the battery 11. A reservation of completed timer charging (Te and the target SOC) is canceled.

When the target vehicle has received the charging command (YES in S91), in S98, the ECU 150 interrupts the timer charging and shifts to the charging control (the remote control) by the server 200 illustrated in FIG. 11. Subsequently in S99, the ECU 150 determines whether the remote control has been ended. Then, when the remote control is ended (YES in S99), the process returns to the first step (S91). As such, the timer charging is restarted (S94).

Regarding the first vehicle (see FIG. 5), the charging start time of the timer charging is advanced by the processes illustrated in FIG. 6 (S31). Thereafter, by the processes illustrated in FIG. 12, the timer charging is started at Ts before the start time of the contract period (S94), and timer charging is continued until Te arrives (S96). The first vehicle does not execute the power adjustment.

Regarding the second vehicle (see FIG. 5), the charging control of the battery 11 is executed by the processes illustrated in FIGS. 11 and 12 within the contract period such that the total charging power W2 follows the target value W1 (S98 in FIG. 12 and S86 in FIG. 11). Thereafter, by the processes illustrated in FIG. 12, the timer charging is started at Ts after the end time of the contract period (S94), and the timer charging is continued until Te arrives (S96). The second vehicle executes the power adjustment within the contract period.

Regarding the third vehicle (see FIG. 5), the immediate charging is executed by the processes illustrated in FIGS. 6 and 12 (S33 in FIG. 6 and S94 in FIG. 12), and the timer charging is continued until Te arrives (S96 in FIG. 12). The third vehicle does not execute the power adjustment.

Regarding the fourth vehicle (see FIG. 5), the immediate charging is executed by the processes illustrated in FIGS. 6 and 12 (S34 in FIG. 6 and S94 in FIG. 12), and the timer charging is continued until the start time of the contract period arrives (S96 in FIG. 12). Within the contract period, the charging control of the battery 11 is executed by the processes illustrated in FIG. 11 such that the total charging power W2 follows the target value W1 (S98 in FIG. 12 and S86 in FIG. 11). Then, when the contract period is ended, the timer charging is restarted by the processes illustrated in FIG. 12 (S94), and the timer charging is continued until Te arrives (S96). The fourth vehicle executes the power adjustment within the contract period.

Regarding the fifth vehicle (see FIG. 9), the charging control of the battery 11 is executed by the processes illustrated in FIGS. 10 and 12 within the contract period such that the total charging power W2 follows the target value W1 (S71 in FIG. 10 and S86 in FIG. 11). Thereafter, by the processes illustrated in FIG. 12, the timer charging is started at Ts after the end time of the contract period (S94), and the timer charging is continued until Te arrives (S96). The fifth vehicle executes the power adjustment within the contract period.

Regarding the sixth vehicle (see FIG. 9), the immediate charging is executed by the processes illustrated in FIGS. 10 and 12 (S72 in FIG. 10 and S94 in FIG. 12), and the timer charging is continued until Te arrives (S96 in FIG. 12). The sixth vehicle does not execute the power adjustment.

Regarding the seventh vehicle (see FIG. 9), the charging control of the battery 11 is executed by the processes illustrated in FIGS. 10 and 12 in a period from when the seventh vehicle becomes the plugged-in state to when Ts arrives such that the total charging power W2 follows the target value W1 (S73 in FIG. 10 and S86 in FIG. 11). Then, when Ts arrives, the timer charging is started by the processes illustrated in FIG. 12 (S94), and the timer charging is continued until Te arrives (S96). The seventh vehicle executes the power adjustment in a period from when it becomes the plugged-in state to when Ts arrives.

As described above, the charging control method according to this embodiment includes the processes illustrated in FIGS. 4, 6, and 10 to 12.

Before the start of a predetermined adjustment period (the contract period), the server 200 selects the target vehicles from among the vehicle group 1 in S13 of FIG. 4. In S31 of FIG. 6, the server 200 advances the charging start of the power accumulation device included in the first vehicle (the target vehicle of which the charging end time within the adjustment period is reserved) from among the selected target vehicles. In S86 of FIG. 11, the server 200 controls the control target (at least one of the target vehicles) such that the total charging power W2 of the power accumulation device included in each of the target vehicles electrically connected to the power system PG (the external power source) follows the target value W1 within the adjustment period.

As above, by completing the timer charging of the first vehicle earlier than the reserved charging end time, the period in which the first vehicle executes the timer charging within the adjustment period is shortened, and accuracy of the power adjustment is restricted from decreasing. With the charging control method, it is possible to suitably use the power accumulation device included in the vehicle for the power adjustment of the external power source without excessively impairing convenience for the user of the vehicle.

The processes illustrated in each of FIGS. 4, 6, and 10 to 12 can be appropriately changed. For example, the priority order of selection in a decision process of the target vehicle (in particular, see S13 of FIG. 4) may be changed. For example, the selection unit 210 may be configured to preferentially select the vehicle reserved for the timer charging as the target vehicle. Alternatively, the selection unit 210 may be configured to preferentially select, as the target vehicle, the vehicle predicted to maintain the state of being electrically connected to the external power source throughout the adjustment period, using the result of movement prediction by the prediction unit 230. Further, the charging control in the seventh vehicle (in particular, see S73 of FIG. 10) may be changed such that the SOC of the power accumulation device rises to a predetermined value by the immediate charging (local control) and then shifts to the remote control. Further, in a case where the SOC of the power accumulation device does not reach the target SOC even when the reserved charging end time (Te) arrives, timer charging control of each target vehicle (in particular, see S95 of FIG. 12) may be changed such that the charging of the power accumulation device is continued until the SOC of the power accumulation device reaches the target SOC.

The method of classification of the vehicles is not limited to the "first vehicle" to the "seventh vehicle" and "others", but can be appropriately changed. For example, the number of classification divisions may be reduced.

The power system PG (the external power source) is not limited to a large-scale alternating current grid provided by the power company, and may be a micro grid or a direct current grid. Further, the configuration of the management system is not limited to that illustrated in FIG. 1. Another server (for example, a server of an upper level aggregator) may be provided between the server 700 and the server 200. The server 200 may communicate with the server 700 via another server. Further, a function of the server 500 may be implemented in the server 200 and the server 500 may be omitted. The server 200 may wirelessly communicate directly with the vehicle group 1. In this embodiment, on-premises servers (the servers 200 and 500 illustrated in FIG. 1) function as computers that manage the vehicle group 1. However, the present disclosure is not limited thereto, and functions of the servers 200 and 500 (in particular, functions related to vehicle group management) may be implemented on a cloud by cloud computing. The management device 1000 may belong to another electricity company (for example, the TSO) instead of the aggregator.

The configuration of the vehicle is not limited to that described above (see FIG. 2). Instead of the charger 61, the vehicle may include a charger/discharger (a charging/discharging circuit) that functions as both a charging circuit and a discharging circuit. The inlet 60 may function as both a charging port and a discharging port. The vehicle may output power discharged from the in-vehicle battery to the external power source via a discharging connector instead of the EVSE. The in-vehicle battery may be replaceable. The vehicle may be an xEV (for example, a PHEV, an FCEV, a range extender EV) other than a BEV

The number of wheels is not limited to four, and may be three, five, or higher. The vehicle may be configured to be chargeable in a non-contact manner. The vehicle may include a solar panel. The vehicle may be configured to be able to autonomously drive or may include a flight function. Types of vehicles are not limited to passenger cars, and may be buses or trucks. The vehicle may be a Mobility as Service (MaaS) vehicle. A MaaS vehicle is managed by a MaaS business operator. The vehicle may be an unmanned travelable vehicle (for example, a robotaxi, an automated guided vehicle (AGV), or an agricultural machine). The vehicle may be an unmanned or one-seater small-sized BEV (for example, a micropallet).

The embodiment disclosed herein needs to be considered as illustrative in all points and not restrictive. The scope of the present invention is shown not by the above description of the embodiments but by the claims, and is intended to include meanings equivalent to the claims and all modifications within the scope thereof.

## Claims

1. A server (200) that controls a vehicle group (1) including a plurality of vehicles (100) configured to be electrically connectable to an external power source (PG), wherein:
each vehicle (100) included in the vehicle group (1) includes a power accumulation device (11);
the server (200) includes:
a selection unit (210) configured to select a plurality of target vehicles from among the vehicle group (1) before a start of a predetermined adjustment period; and
a charging control unit (220); and
the charging control unit (220) is configured to:
control at least one of the target vehicles such that a total charging power (W2) of the power accumulation device (11) included in each of the target vehicles electrically connected to the external power source (PG) follows a target value (W1) within the adjustment period; and
advance a start of charging of a power accumulation device (11) included in a first vehicle of which a charging end time is reserved within the adjustment period from among the target vehicles.

2. The server (200) according to claim 1, wherein the charging control unit (220) is configured to advance the start of the charging of the power accumulation device (11) included in the first vehicle such that the charging is completed before the start of the adjustment period.

3. The server (200) according to claim 1 or 2, wherein:
the selection unit (210) is configured to select the target vehicles from among the vehicle group (1) a day before or two days before the adjustment period; and
the charging control unit (220) is configured to, before the start of the adjustment period, distinguish the first vehicle from among the target vehicles and advance the start of the charging of the power accumulation device (11) included in the first vehicle, and then sequentially receive the target value (W1) arbitrarily requested within a power range set in advance within the adjustment period.

4. The server (200) according to any one of claims 1 to 3, wherein:
each vehicle (100) included in the vehicle group (1) is configured to reserve the charging end time and a target state of charge (SOC); and
the charging control unit (220) is configured to acquire, for the target vehicle of which the charging end time and the target SOC are reserved, a charging start time at which a SOC of the power accumulation device (11) included in the target vehicle reaches the target SOC at the charging end time.

5. The server (200) according to claim 4, wherein the charging control unit (220) is configured to:
distinguish a second vehicle of which the charging start time is after an end of the adjustment period and which is electrically connected to the external power source (PG) before the start of the adjustment period from among the target vehicles; and
execute charging control of a power accumulation device (11) included in the second vehicle such that the total charging power (W2) follows the target value (W1) within the adjustment period.

6. The server (200) according to claim 4 or 5, wherein the charging control unit (220) is configured to:
distinguish a third vehicle of which the charging end time is after an end of the adjustment period and which is electrically connected to the external power source (PG) before the start of the adjustment period and after the charging start time from among the target vehicles; and
continue charging of a power accumulation device (11) included in the third vehicle from a time when the third vehicle is electrically connected to the external power source (PG) to the charging end time.

7. The server (200) according to any one of claims 4 to 6, wherein the charging control unit (220) is configured to:
distinguish a fourth vehicle of which the charging start time is within the adjustment period and which is electrically connected to the external power source (PG) before the start of the adjustment period from among the target vehicles; and
continue charging of a power accumulation device (11) included in the fourth vehicle from a time when the fourth vehicle is electrically connected to the external power source (PG) to a start time of the adjustment period.

8. The server (200) according to any one of claims 4 to 7, wherein the charging control unit (220) is configured to:
distinguish a fifth vehicle of which the charging start time is after an end of the adjustment period and which is electrically connected to the external power source (PG) during the adjustment period from among the target vehicles; and
execute charging control of a power accumulation device (11) included in the fifth vehicle such that the total charging power (W2) follows the target value (W1) within the adjustment period.

9. The server (200) according to any one of claims 4 to 8, wherein the charging control unit (220) is configured to:
distinguish a sixth vehicle which is electrically connected to the external power source (PG) within the adjustment period and after the charging start time from among the target vehicles; and
immediately start charging of a power accumulation device (11) included in the sixth vehicle when the sixth vehicle is electrically connected to the external power source (PG).

10. The server (200) according to any one of claims 4 to 9, wherein the charging control unit (220) is configured to:
distinguish a seventh vehicle which is electrically connected to the external power source (PG) before the charging start time within the adjustment period and after the start of the adjustment period from among the target vehicles; and
execute charging control of a power accumulation device (11) included in the seventh vehicle such that the total charging power (W2) follows the target value (W1) in a period from a time when the seventh vehicle is electrically connected to the external power source (PG) to a time when the charging start time arrives.

11. The server (200) according to any one of claims 1 to 10, wherein the selection unit (210) is configured to preferentially select a vehicle (100) reserved for timer charging as the target vehicle.

12. The server (200) according to any one of claims 1 to 11, wherein:
the server (200) further includes a prediction unit (230) configured to execute movement prediction of each vehicle (100) included in the vehicle group (1); and
the selection unit (210) is configured to preferentially select, as the target vehicle, a vehicle (100) predicted to maintain a state of being electrically connected to the external power source (PG) throughout the adjustment period, using a result of the movement prediction by the prediction unit (230).

13. A charging control method comprising:
selecting a plurality of target vehicles from among a vehicle group (1) before a start of a predetermined adjustment period;
advancing a start of charging of a power accumulation device (11) included in a target vehicle reserved for a charging end time within the adjustment period from among the selected target vehicles; and
controlling at least one of the target vehicles such that a total charging power (W2) of the power accumulation device (11) included in each of the target vehicles electrically connected to an external power source (PG) follows a target value (W1) within the adjustment period.
